Europäisches Patentamt

European Patent Office

Office européen des brevets

(19)

(11) Numéro de publication : **0 164 295**
**B1**

(12)

# FASCICULE DE BREVET EUROPÉEN

(45) Date de publication du fascicule du brevet :
07.09.88

(21) Numéro de dépôt : 85420103.5

(22) Date de dépôt : 30.05.85

(51) Int. Cl.⁴ : **A 01 K 89/01, B 65 H 75/28**

(54) Dispositif d'accrochage du fil pour moulinet de pêche.

(30) Priorité : 01.06.84 FR 8409257

(43) Date de publication de la demande :
11.12.85 Bulletin 85/50

(45) Mention de la délivrance du brevet :
07.09.88 Bulletin 88/36

(84) Etats contractants désignés :
DE GB IT SE

(56) Documents cités :
CH-A- 451 761
DE-A- 2 209 859
FR-A- 900 325
FR-A- 961 023
GB-A- 18 098
GB-A- 585 734

(73) Titulaire : MITCHELL SPORTS
Av des Sorbiers Thyez
F-74300 Cluses (FR)

(72) Inventeur : Ruin, Jean
Av Louis Coppel Thyez
F-74300 Cluses (FR)

(74) Mandataire : de Beaumont, Michel
Cabinet Poncet 7, chemin de Tillier B.P. 317
F-74008 Annecy Cédex (FR)

Jouve, 18, rue St-Denis, 75001 Paris, France

## Description

La présente invention concerne les moulinets pour canne à pêche, dont la réserve de fil appelée « bobine » ou « tambour », est une pièce sensiblement de révolution constituée de deux flasques étendus radialement et réunis par un moyeu cylindrique s'étendant axialement d'un flasque à l'autre.

On cherche généralement à accrocher l'extrémité libre du fil lorsque le fil n'est pas engagé dans les anneaux de la canne à pêche, afin d'éviter que le fil se déroule et que son extrémité s'emmêle.

Ainsi, le brevet FR-A-961 023 décrit un moulinet de pêche comportant une languette transversale destinée à l'accrochage du fil débarrassé du leurre. La bobine du moulinet décrit est conforme au préambule de la revendication : il comprend un flasque antérieur et un flasque postérieur étendus radialement et réunis par un moyeu cylindrique s'étendant axialement d'un flasque à l'autre, le flasque postérieur étant prolongé vers l'arrière par une partie cylindrique comportant un évidement central postérieur dont le fond est formé par le flasque postérieur, le flasque postérieur comprenant une languette élastique rapportée dont une première extrémité est fixée sur une paroi interne de l'évidement central postérieur dont une seconde extrémité est en appui élastique sur un logement de la face périphérique extérieure de la partie cylindrique de flasque postérieur de manière à retenir par pincement le fil de pêche sur ce logement, la languette passant par une lumière radiale de la partie cylindrique.

Toutefois, au cours de la partie de pêche, le fil sortant de la bobine passe dans les anneaux de la canne à pêche, et il peut être intéressant de tenir le fil à une longueur choisie, permettant son dévidement libre jùsqu'à cette longueur, tout en assurant un maintien suffisant lorsque la longueur est atteinte. Mais il est alors nécessaire d'éviter la rupture du fil sous l'action d'une tension trop violente, et il faut pour cela prévoir une sécurité de décrochage, c'est à dire la fonction spécifique aux moulinets par laquelle une tension du fil dans le sens de son utilisation, traversant les anneaux, libère automatiquement le fil sans rupture.

Les moulinets connus n'assurent pas la fonction de sécurité de décrochage et ne mentionnent pas la nécessité de l'assurer.

La présente invention a pour objet d'apporter des perfectionnements aux moulinets connus en permettant de réaliser par un même dispositif d'une part l'accrochage de la partie libre du fil lorsqu'il n'est pas engagé dans les anneaux de la canne à pêche, et d'autre part sa tenue à une longueur déterminée tout en assurant la sécurité de décrochage. L'invention facilite considérablement la pêche au posé.

Selon un autre objet de l'invention, le dispositif d'accrochage est d'accès très facile, permettant une manoeuvre aisée, et a une structure particulière adaptée aux moulinets, même de taille réduite, du fait de son faible encombrement.

Pour atteindre ces objets ainsi que d'autres, le dispositif d'accrochage selon l'invention comprend des moyens assurant d'une part l'accrochage du fil par pincement élastique et d'autre part son décrochage sous l'action d'une traction du fil dans son sens de déroulement vers les anneaux de la canne lorsque la traction a une intensité supérieure à une valeur prédéterminée.

La bobine selon l'invention se caractérise par le fait que :

— la seconde extrémité de la languette est dirigée dans la direction axiale vers le flasque antérieur, la languette assurant, outre, comme vu ci-dessus, l'accrochage du fil par pincement élastique, son décrochement sous l'action d'une traction du fil dans le sens axial vers le flasque antérieur lorsque la traction a une intensité supérieure à une valeur prédéterminée, de sorte que le dispositif sert d'une part à accrocher l'extrémité libre du fil lorsque le fil n'est pas engagé dans les anneaux de la canne à pêche, et d'autre part à tenir le fil à une longueur choisie au cours de la partie de pêche, tout en assurant la sécurité au décrochage,

— la première extrémité de la languette est solidarisée au fond de l'évidement central postérieur de la bobine, et la languette, après avoir traversé la lumière radiale de la partie cylindrique du flasque postérieur, prend appui en outre sur le rebord antérieur de ladite lumière radiale, qui fait simultanément office du logement ci-dessus mentionné pour recevoir et pincer le fil de pêche,

— la languette comporte, en partant de sa première extrémité, une première portion radiale, se raccordant par un coude avec une seconde portion longitudinale s'étendant vers l'arrière de la bobine, elle-même raccordée par un coude à 180 degrés avec une troisième portion longitudinale se développant vers l'avant de la bobine jusqu'à la seconde extrémité. Sous l'action d'une traction du fil, celui-ci peut ainsi écarter la languette et s'échapper.

D'autres objets, caractéristiques et avantages de la présente invention ressortiront de la description suivante d'un mode de réalisations particulier, faite en relation avec les figures jointes, parmi lesquelles :

— La figure 1 représente une vue en coupe longitudinale d'une bobine de moulinet de pêche munie d'un dispositif d'accrochage selon un mode de réalisation ; et

— la figure 2 représente une vue de face d'un dispositif d'accrochage selon la figure 1.

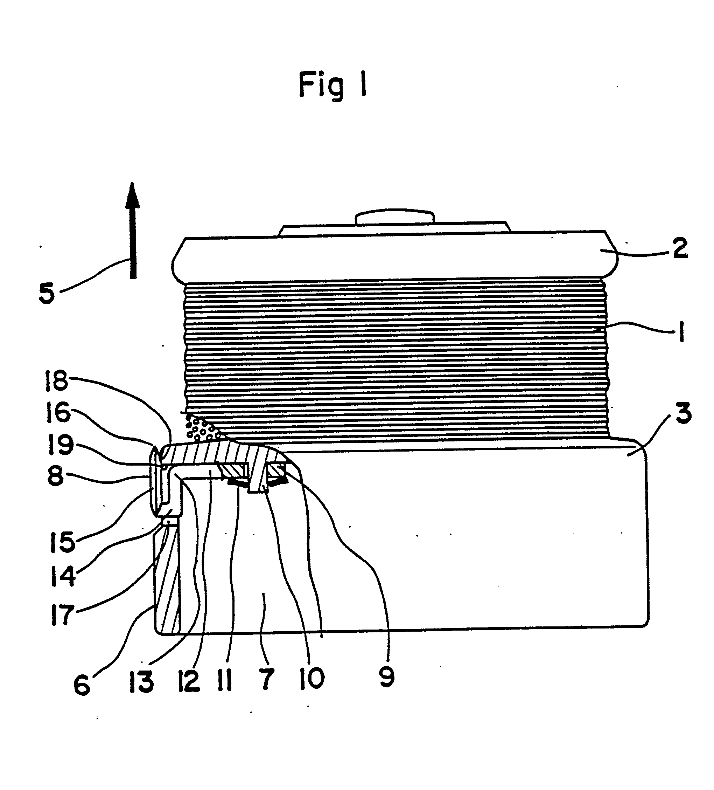

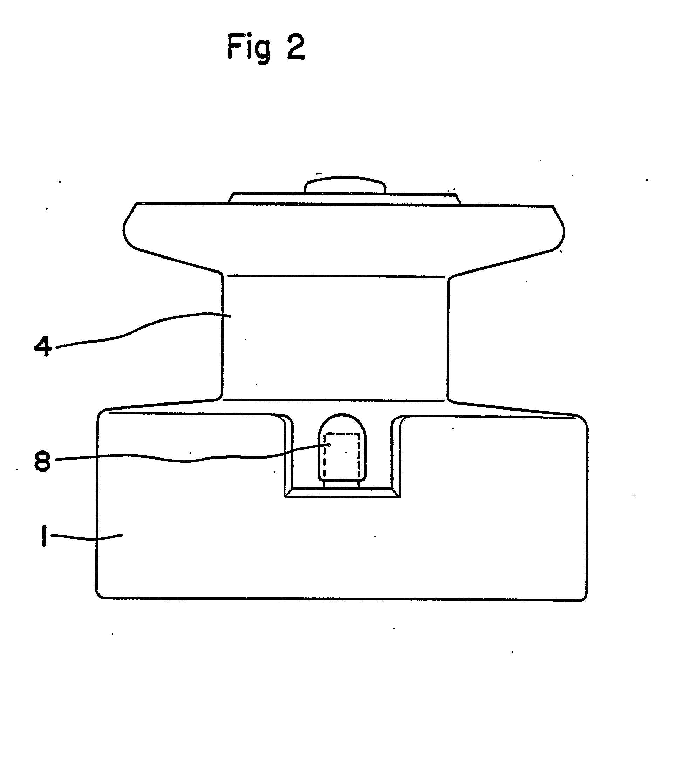

Comme le représentent les figures 1 et 2, la bobine 1 comprend deux flasques 2 et 3 étendus radialement et réunis par un moyeu cylindrique 4 s'étendant axialement d'un flasque à l'autre. Dans le mode de réalisation représenté sur les figures, le moulinet est du type à bobine fixe, l'axe de la bobine étant approximativement parallèle au sens de déroulement du fil représenté par la flèche 5. Le flasque postérieur 3 est prolongé vers l'arrière par une partie cylindrique 6 comportant un évidement central postérieur 7 dont le fond est formé par le flasque 3.

Une languette 8 en matière élastique, rapportée sur la bobine 1, a sa première extrémité 9 solidarisée au fond de l'évidement central 7, par exemple par engagement sur un pion 10 et assemblée par un clips 11. Partant de la première extrémité 9, la languette comporte une première portion radiale 12, se raccordant par un coude à angle droit 13 avec une seconde partie longitudinale 14 s'étendant vers l'arrière de la bobine, elle-même raccordée par un coude à 180 degrés avec une troisième portion longitudinale 15 se développant vers l'avant de la bobine jusqu'à la seconde extrémité 16 de la languette. La languette 8 traverse une lumière 17 radiale de la partie cylindrique 6 du flasque postérieur 3, et a sa seconde extrémité 16 portant en appui élastique sur le rebord antérieur 18 de la lumière. La lumière 17 fait office de logement pour recevoir le fil 19 disposé transversalement par rapport à la languette.

Le fonctionnement du dispositif est le suivant : pour son accrochage, le fil est engagé transversalement d'avant en arrière sous la languette 8, la repoussant vers l'extérieur, et s'engage dans la lumière 17. La lumière a une largeur inférieure à la largeur de la languette, de sorte que le fil est pincé entre la languette et les bords de la lumière. On peut ainsi fixer l'extrémité libre du fil lorsque celui-ci n'est pas engagé dans les anneaux de la canne. On peut également fixer une partie du fil à longueur déterminée, le fil étant susceptible de se dégager en repoussant la languette sous l'action d'une traction suffisante dans le sens de la flèche 5.

### Revendication

Bobine (1) de moulinet de canne à pêche, comprenant un flasque antérieur (2) et un flasque postérieur (3) étendus radialement et réunis par un moyeu cylindrique (4) s'étendant axialement d'un flasque à l'autre, le flasque postérieur (3) étant prolongé vers l'arrière par une partie cylindrique (6) comportant un évidement central postérieur (7) dont le fond est formé par le flasque postérieur (3), le flasque postérieur (3) comprenant une languette (8) élastique rapportée dont une première extrémité (9) est fixée sur une paroi interne de l'évidement central postérieur (7) et dont une seconde extrémité est en appui élastique sur un logement (17) de la face périphérique extérieure de la partie cylindrique (6) du flasque postérieur de manière à retenir par pincement le fil de pêche sur ce logement (17), la languette passant par une lumière radiale de la partie cylindrique (6), caractérisée en ce que :

— la seconde extrémité (16) de la languette est dirigée dans la direction axiale vers le flasque antérieur (2), la languette assurant, outre, comme vu ci-dessus, l'accrochage du fil de pêche par pincement élastique, son décrochement sous l'action d'une traction du fil dans le sens axial vers le flasque antérieur (2) lorsque la traction a une intensité supérieure à une valeur prédéterminée, de sorte que le dispositif sert d'une part à accrocher l'extrémité libre du fil lorsque le fil n'est pas engagé dans les anneaux de la canne à pêche, et d'autre part à tenir le fil à une longueur choisie au cours de- la partie pêche, tout en assurant la sécurité au décrochage en cas de traction,

— la première extrémité (9) de la languette (8) est solidarisée au fond de l'évidement central (7) postérieur de la bobine, et la languette, après avoir traversé la lumière (17) radiale de la partie cylindrique (6) du flasque postérieur, prend appui en outre sur le rebord antérieur (18) de ladite lumière radiale, qui fait simultanément office du logement ci-dessus mentionné pour recevoir et pincer le fil de pêche,

— la languette comporte, en partant de sa première extrémité (9), une première portion radiale (12), se raccordant par un coude avec une seconde portion longitudinale (14) s'étendant vers l'arrière de la bobine, elle-même raccordée par un coude à 180 degrés avec une troisième portion longitudinale (15) se développant vers l'avant de la bobine jusqu'à la seconde extrémité (16).

### Claim

A fishing rod winder reel (1) comprising a front flange (2) and a rear flange (3) extending radially and joined together by a cylindrical hub (4) extending axially from one flange to the other, the rear flange (3) being rearwardly extended by a cylindrical portion (6) comprising a rear central recess (7) the bottom of which is formed by the rear flange (3), the rear flange (3) comprising a resilient attached tab (8) of which a first end (9) is, secured to an inner wall of the rear central recess (7) and of which a second end bears resiliently on a seat (17) of the outer peripheral surface of the cylindrical portion (6) of the rear flange, in such a way as to hold the fishing line on this seat (17) by a gripping action, the tab passing through a radial opening of the cylindrical portion (6), characterised in that :

— the second end (16) of the tab is directed in the axial direction towards the front flange (2), the tab furthermore ensuring — as apparent from the preceding — the retention of the line by resilient gripping, its release under the action of a pull on the line in the axial direction towards the front flange (2) if the pull has a strength exceeding a predetermined value, so that the device serves on the one hand to grasp the free end of the line when this line is not engaged in the hoops or rings of the fishing rod, and on the other hand to hold the line at a selected length during fishing, whilst providing reliable release in case of a pull,

— the first end (9) of the tab (8) is fastened to the bottom of the rear central recess (7) of the reel, and the tab, after passing through the radial opening (17) of the cylindrical portion (6) of the rear flange, furthermore bears on the front edge (18) of the said radial opening, which simultaneously acts as the seat referred to above for receiving and grasping the fishing line, — starting from its first end (9), the tab comprises a radial first portion (12) joined via a bend to a longitudinal second portion (14) extending towards the rear of the reel, itself joined via a 180 degree bend to a longitudinal third portion (15) stretching towards the front of the reel as far as the second end (16).

## Patentanspruch

Spule (1) einer Rolle einer Angel zum Fischen, aufweisend einen vorne liegenden Flansch (2) und einen hinten liegenden Flansch (3), die sich radial ausbreiten und die durch eine zylindrische Nabe (4) verbunden sind, die sich axial von einem Flansch zum anderen erstreckt, wobei der hinten befindliche Flansch (3) nach hinten durch einen zylindrischen Abschnitt (6) verlängert ist, der eine zentrale hinten befindliche Aussparung (7) aufweist, deren Boden durch den hinten befindlichen Flansch (3) gebildet ist, wobei der hinten befindliche Flansch (3) eine elastische, angesetzte Lasche (8) aufweist, deren erstes Ende (9) auf einer internen Seitenwand der hinten befindlichen zentralen Aussparung (7) befestigt ist und deren zweites Ende sich auf einem Auflager (17) der am Rand befindlichen äußeren Seite des zylindrischen Abschnitts (6) des hinten befindlichen Flansches abstützt, wobei durch Quetschung der Faden zum Fischen an diesem Auflager (17) zurückgehalten wird, und die Lasche eine radiale Öffnung des zylindrischen Abschnittes (6) passiert, dadurch gekennzeichnet, daß :
— das zweite Ende (16) der Lasche in die Richtung axial zu dem vorne befindlichen Flansch (2) geführt ist, wobei die Lasche darüber hinaus, wie obenstehend beschrieben, die Klemmung des Angelfadens durch eine elastische Quetschung sicherstellt, seine Freigabe beim Betätigen des Ziehens des Fadens im axialen Sinn gegen den vorne befindlichen Flansch (2), wenn das Ziehen eine Spannung über einen vorgegebenen Wert hat, so daß die Anordnung zum einen das freie Ende des Fadens einklemmt, wenn der Faden sich nicht in den Ringen der Fischerangel befindet, und zum anderen den Faden auf eine gewählte Länge während des Verlaufs des Fischereigangs hält, wobei die Sicherheit bei der Freigabe im Fall des Ziehens sichergestellt ist,
— das erste Ende (9) der Lasche (8) mit dem Boden der zentralen, hinten befindlichen Aussparung (7) der Spule verbunden ist, wobei die Lasche, nachdem sie die radiale Öffnung (17) des zylindrischen Abschnitts (6) des hinten befindlichen Flansches überquert hat, außerdem auf dem vorne befindlichen Randanschlag (18) der besagten radialen Öffnung eine Stütze nimmt, die zugleich als Auflager, wie obenstehend erwähnt, zum Aufnehmen und Einklemmen des Angelfadens dient, und
— die Lasche ausgehend von ihrem ersten Ende (9) einen ersten radialen Abschnitt (12) aufweist, der sich mit einer Krümmung mit einem zweiten langgestreckten Abschnitt (14) verbindet, der sich gegen das Hinterteil der Spule erstreckt, der selbst in einer Krümmung von 180° mit einem dritten langgestreckten Abschnitt (15) verbunden ist, der sich zum Vorderteil der Spule bis zum zweiten Ende (16) erstreckt.

Fig I

# Fig 2